Europäisches Patentamt

European Patent Office

Office européen des brevets

(19)

(11) Publication number: **0 041 635**
**B1**

(12) **EUROPEAN PATENT SPECIFICATION**

(45) Date of publication of patent specification: 31.10.84

(51) Int. Cl.³: **C 03 B 3/00**

(21) Application number: **81103876.9**

(22) Date of filing: **20.05.81**

(54) Method of improving glass melting by ablation enhancement.

(30) Priority: 02.06.80 US 155802
16.06.80 US 159528
26.02.81 US 236161

(43) Date of publication of application:
16.12.81 Bulletin 81/50

(45) Publication of the grant of the patent:
31.10.84 Bulletin 84/44

(84) Designated Contracting States:
BE DE FR GB IT LU NL SE

(56) References cited:
US-A-1 623 057
US-A-2 281 050

(73) Proprietor: PPG INDUSTRIES, INC.
One PPG Place
Pittsburgh Pennsylvania 15272 (US)

(72) Inventor: Hammel, Joseph John
201 Cornwall Street
Pittsburgh Pennsylvania (US)
Inventor: Savolskis, Edward Patrick
2220 Circle Road
Carlisle, Pennsylvania 17013 (US)
Inventor: Scott, Walter William
1528 Terrace Avenue
Carlisle, Pennsylvania 17013 (US)
Inventor: Rau, Frederick Charles
197 Gateshead Drive
McMurray, Pennsylvania 15317 (US)

(74) Representative: Hann, Michael, Dr. et al
Patentanwälte Dr. Michael Hann Dr. H.-G.
Sternagel Marburger Strasse 38
D-6300 Giessen (DE)

Courier Press, Leamington Spa, England.

## Description

Background of the invention

This invention is directed to a method of melting glass as defined in the preamble of claim 1. Such a method is known from US—A—1623057.

This invention relates to improvements in the rate of melting of glass in a tank-type melting furnace whereby the output of a particular furnace may be increased at a given energy consumption, or, conversely, the energy consumption may be reduced for a given throughput. More particularly the invention deals with improvements in the manner in which raw glass batch materials are fed to a glass melting furnace so as to enhance the rate the raw ingredients are brought to a liquid state.

In a typical glass melting furnace of the regenerative or recuperative type, a body of molten glass is maintained in the furnace and raw glass batch materials are fed through an inlet at one end of the furnace onto the surface of the pool of molten glass. There, the batch materials usually form an unmelted layer on the surface of the molten glass pool which may extend a considerable distance into the furnace until it becomes melted into the pool of molten glass. At the opposite end of the furnace, melted and reacted glass is withdrawn from the pool of molten glass through an outlet opening.

It has been recognized that the floating layer or blanket of unmelted batch ingredients acts as a thermal insulator which limits the rate at which the temperature of the batch is raised sufficiently to enter a liquid state. Therefore, liquefaction of glass batch usually is limited to a relatively thin layer at the surface of the batch blanket. In order to overcome this problem, attempts have been made in the past to increase the surface area of the batch blanket exposed to the flames in the furnace. For example, U.S. Patent No. 4,030,905 shows an arrangement for plowing furrows transversely across a batch blanket. Such an arrangement may produce an increase in batch surface area and some slight improvement in run-off of melted batch, but possesses certain drawbacks. Plowing the furrows causes batch to be piled up more deeply on either side of each furrow, thereby further insulating the underlying batch from the overhead sources of heat. Furthermore, any enhancement in run-off by plowing is limited because the furrows do not extend to the underlying molten glass and because some of the loose batch material tends to fall back into the furrow behind the plow.

Another approach to breaking up a batch blanket is disclosed in U.S. Patent No. 3,994,710 wherein an inverted T shaped member is employed to chop the batch blanket into pieces. Such an arrangement appears most suitable for a location relatively far into the furnace where melting of the batch blanket has already progressed to an advanced stage. It would be desirable to improve run-off as early as possible in the melting process. Additionally, by being located within the main body of the melting furnace, the T bar of the patent requires cooling which detracts from any net thermal gains. Also, operating on the batch blanket within the main body of the furnace carries with it the risk of increased carry-over of materials which can have an adverse effect on the walls and regenerator of recuperator system of the furnace. However, carrying out such a chopping operation on an upstream portion of the batch blanket would not appear to be advantageous since the buoyant batch material would be pressed into the molten glass temporarily and then rise again.

Another prior art approach has been to bring the batch ingredients into more intimate contact with the molten glass such as in U.S. Patent Nos. 2,533,826 and 2,749,666. The object of this approach is to take advantage of conductive heat from the molten glass, but it has now been found that the major source of heat (typically about seventy percent) for melting the batch is the overhead radiant heat from the combustion flames in the furnace. Therefore, covering the batch with molten glass can be disadvantageous in that it reduces the amount of radiant heat received by the batch. It would be desirable to increase rather than decrease the impingement of radiant energy on the batch materials.

Other attempts have been made to improve batch melting by reducing the thickness of the batch blanket such as in U.S. Patent Nos. 2,327,887; 3,193,119, and 4,004,903. While reducing batch blanket thickness may generally be desirable, the approach in each of these patents has the drawback of reducing surface area exposed to overhead flames and inhibiting run-off of melted batch. Furthermore, in many commercial glass melting operations, a primary objective is to maximize throughput of a given furnace. In such a case, the batch blanket would already cover a maximum area and any reduction in batch blanket thickness would indesirably reduce the throughput of the furnace. The last mentioned patent overcomes this dilemma somewhat by compacting the batch blanket, but, nevertheless, a flat upper surface is the result.

It is also known to produce a plurality of discrete batch piles by employing a plurality of small batch feeders such as in U.S. Patent No. 3,127,033. Such an approach appears to be quite limited as to throughput because of the small size of the inlets through which batch is fed.

Two types of batch feeders are in widespread commercial use in the glass industry. The first being the reciprocating tray type as shown in U.S. Patent Nos. 1,916,262 and 3,780,889 and the second being the rotary type as shown in U.S. Patent No. 2,829,784. The reciprocating tray type feeder inherently tends to form a series of ridges extending laterally across the batch blanket. However, these ridges are not as steep as would be desired for the sake of enhancing run-off nor do the furrows between the ridges provide a sufficiently free path for run-off. After melting of the batch blanket has progressed substantially, the ridges typically become separated into floating masses known as "logs". However, break-up of the batch blanket does not occur as early as would be desired. The rotary type feeder produces a nearly level batch blanket with only a shallow trademark on the surface produced by the rotary feeder blades. Hence, the rotary type feeder is particularly characterized by poor run-off.

While the prior art appears to recognize some advantages for increasing the surface area of the batch blanket and for minimizing the thickness of the batch layer, these improvements have heretofore been implemented in embodiments which favor one of the improvements to the exclusion of the other. Furthermore, it appears that the prior art has not fully appreciated nor used the advantages attendant to enhancing run-off of melted material from a batch blanket.

Summary of the invention

It has now been found that a major rate determining step of the glass melting process is the ablation of the batch layer, i.e., the run-off of a thin melted layer to expose underlying unmelted batch. Although surface area available for heat transfer to the batch is an important parameter for determining the rate of melting, it has now been discovered, quite surprisingly, that the area available for run-off is even more important. Thus, the present invention is directed to improving the run-off of liquid material from the batch layer so as to improve the overall melting rate. This object of the invention is met by the features of the characterising part of claims 1 and 10. The most beneficial ablation enhancing affects have been found when the batch blanket is provided not only with a large proportion of slope run-off areas, but also with a well distributed number of run-off openings extending substantially through the thickness of the batch blanket and into communication with the underlying molten glass. These run-off openings prevent a slow-down of the ablation affect due to the areas between the run-off slopes becoming filled with the melted liquid.

Ablation enhancement may be accomplished in a number of ways in accordance with the present invention. One approach is to feed molded shapes into the melting furnace. These shapes could be spheres, hemispheres, tetrahedrons, pyramids, cones, cubes, slabs, or the like, but it has been found particularly advantageous to employ a toroid shape. Since the primary purpose for these shaped aggregates of batch is to provide sloping surfaces for run-off rather than surface area, they should be sufficiently large to maintain their structural integrity for an appreciable time within the furnace. Therefore, the molded aggregates should be considerably larger than the units of agglomerated batch previously employed in the prior art (e.g., pellets and briquettes). On the other hand, the shaped aggregations should not be so large as to result in unmelted chunks traveling downstream into the furnace beyond the usual batch melting zone. Therefore, it would be preferred that the shaped aggregates have a height no greater than the usual thickness of a batch blanket. Conventional glass batch formulas, when slightly wetted with water or caustic soda solutions, can readily be molded to shapes having sufficient structural integrity. The wetted batch may be tamped slightly into a mold or conventional briquetting or tabletting processes on an enlarged scale may be employed. In any case, the batch in the shaped aggregate will be compacted relative to a loosely fed batch blanket. The shaped aggregates may be fed into the melting furnace with a distribution that provides substantially an equivalent mass density of batch in the melting zone to that conventionally provided by the batch blanket. At the same time, interstices between the shaped aggregates should provide run-off openings to the underlying body of molten glass.

In a second embodiment of the invention, shaped conglomerates having sloped surfaces for enhancement of run-off are formed *in situ* at the inlet of the melting furnace, thereby avoiding the necessity of conveying and feeding preshaped aggregates to the melting furnace. The top surface of the batch blanket is imprinted with a pattern of shapes as it is being fed into the furnace. The shapes may be the hemispheres, pyramids, tetrahydrons, cones, or the like, and preferably toroids, as mentioned above. Impressing the shapes into the surface of the batch blanket entails compacting the batch so that the shapes have structural integrity and so that the thickness of the batch blanket is not increased. The shaping should extend substantially through the thickness of the batch blanket so as to create openings to the underlying molten glass between the shaped aggregates. The shaping may be carried out by pressing the batch with molding means at or near the location of delivery onto the molten glass pool in the inlet extension of a furnace. The molding means may be reciprocated to stamp the batch periodically or the molding means may be provided with rotary motion so as to also provide driving force for feeding the shaped batch blanket into the furnace. Shaping may take place over the molten glass is sufficient buoyant force is present, but preferably the shaping is carried out by pressing the batch between a stationary support and the molding means.

A third embodiment of the invention, which is preferred on the basis of practical adaptation to existing glass melting operations, entails producing holes in a batch blanket shortly after it has been fed into the furnace. The holes may be produced by a tapered member inserted into the batch so as to compact the batch on the walls of the opening produced. As a result, slopes and openings for run-off are produced without substantially increasing the thickness of the batch layer.

It has been found further than the melting rate of the glass batch can be further enhanced by lengthening the stroke of the hole-producing tapered member so that the bottom of each such member penetrates into the body of molten glass a distance substantially equal to the thickness of the glass batch penetrated. This procedure produces a slight wave action within the molten body of glass near the inlet end of the furnace, which enhances the melting of the glass batch, but does not result in contact of the hole-producing member with molten glass. It has been further found that the process of the present invention produces a substantially uniform distribution of glass batch within the furnace.

The drawings

Figure 1 is a schematic cut-away view of a feed inlet extension of a glass melting furnace wherein the batch blanket is being shaped to a series of hemispheres by a rotary molding means in accordance with one embodiment of the present invention.

Figure 2 is a schematic cut-away view of a batch blanket shaped to a series of pyramids.

Figure 3 is a schematic cut-away view of a batch blanket shaped to a series of toroids.

Figure 4 is a cross-sectional side view of an inlet end of a glass melting furnace incorporating means for producing openings in a batch blanket in accordance with a preferred embodiment of the present invention.

Figure 5 is a schematic cross-sectional end view of the inlet extension of the melting furnace shown in Figure 4, taken along line 5—5, showing a preferred embodiment for producing a plurality of openings across the batch blanket simultaneously.

Figure 6 is an enlarged view taken along lines 6—6 in Figure 5 showing the details of one of the tapered hole producing members.

Figure 7 is an enlarged top view taken along line 7—7 in Figure 6 showing structural details of the hole producing member.

Figure 8 is a side view of a portion of the inlet extension of the furnace shown in Figure 5 showing details of the hole producing apparatus of a preferred embodiment.

Figure 9 depicts an alternate embodiment of a tapered hole producing member including a flaired upper portion.

Figure 10 is a cross-sectional view of a typical configuration for the preferred toroid shaped aggregate.

Figure 11 is a side elevation view in section of the inlet end of a glass melting furnace incorporating another embodiment of batch surface modifier of the present invention;

Figure 12 is a front elevation view of a hole-producing member useful with the batch surface modifier;

Figure 13 is a side elevation view of one of the hole-producing members shown in Figure 11;

Figure 14 is a top plan view of the inlet end of the glass melting furnace of Figure 11;

Figure 15 is a front elevation view of two adjacent batch surface modifiers of the present invention which incorporate a conical hole-producing member; and

Figure 16 is a side elevation view of Figure 15 illustrating a mounting arrangement for the batch surface modifiers.

Detailed description

In continuous glass furnaces, a loose granular mix of materials from which the glass is produced, commonly referred to as batch, or batch material, is introduced into one end of a melting furnace and removed as melted glass from the opposite end. There is maintained a nearly constant level of molten glass within the furnace. The specific mix of materials used will vary with the type of glass product desired. In the preparation of sodium silicate glass, silica, in the form of sand, is mixed with alkali, i.e., sodium carbonate and/or sodium hydroxide, and this mixture fed to the melting furnace. In the manufacture of soda lime glass, raw materials comprising a mixture of scrap glass or cullet, sand, limestone, soda ash, salt cake, dolomite, rouge, and the like are charged to the glass furnace. The batch feed to the glass furnace should preferably contain sufficient moisture or other liquid binding aids, e.g., caustic soda solution or sodium silicate solution, so that the compacted batch surrounding the depressions made in the surface of the batch in accordance with the invention will have sufficient self-adhesion or structural integrity to substantially maintain the depressions intact. Batch feed of this nature is still referred to as being essentially dry.

The method and apparatus of the present invention are applicable to the manufacture of molten glass materials such as sodium silicate glass or the more commonly known soda lime glass. As used in the specification and claims herein, the term "glass" is intended to mean and include all types of glass manufacture for the reason that the utility of the invention is not a function of the composition of the glass.

The insulating effect of glass batch has been demonstrated by melting a hemisphere of batch having a six inch (15.24 centimeter) radius in which thermocouples were implanted at various distances from the surface. Melting the hemisphere in a furnace at 2800°F. (1540°C.) produced a surface layer of foam beneath which active melting appeared to take place in a 0.15 inch (3.8 millimeter) thick layer at the surface of the hemisphere. The temperature at the outside of this thin melting layer was 2050°F. (1120°C.) and on the inner side was 1500°F. (825°C.). An additional inch (2.54 centimeters) below the melting layer, the batch temperature was observed to be approximately 100°F. (38°C.) which was only slightly above room temperature. Dissection of partly melted hemisphere shows that a major portion of the batch in the interior remains unaffected, even though melting has taken place at the surface.

The following experiment was conducted to observe the influence of shape on the melting rate of batch. Glass batch of a standard commercial formulation was molded into five shapes: slab, cone, hemisphere, scalloped slab, and toroid. So that each of the shapes would represent a modification of a given area of a batch blanket, each of the shapes was proportioned so as to yield essentially the same base area and volume (and therefore mass) based on the base area and volume of a six inch (15.24 centimeters) radius hemisphere. Surface area varied from one shape to another. The precise dimensions are set forth in Table I. The shapes were molded by tamping the batch, which was wetted with about 7 to 8 weight percent water, into a mold so as to compact the batch to a density of about 90 pounds per cubic foot (1.43 kg/liter) compared to a loose batch density of about 70 to 75 pounds per cubic foot (1.11 to 1.19 kg/liter). The slab at its base measured 10.6 by 10.6 inches (27.0 by 27.0 centimeters) and 4 inches (10.16 centimeters) in height. The cone has a based diameter of 12 inches (30.5 centimeters) and a height of 12 inches (30.5 centimeters). The hemisphere had a radius of six inches (15.24 centimeters). The scalloped slab had a base of 15.45 by 7.33 inches (39.2 by 18.6 centimeters) and a height of 2 inches (5.08 centimeters) above which extended three contiguous, axially bisected cylinders, each having a radius of 2.57 inches (6.53 centimeters) and a length of 7.33 inches (18.6 centimeters). The toroid had an outer base diameter of 12.2 inches (31.0 centimeters) and an inner opening 1.9 inches (4.8 centimeters) in diameter at the base. The upper portion of the toroid was hemispherically rounded with a radius of 2.57 inches (6.53 centimeters) and rested on a base portion 2 inches (5.08 centimeters) in height which was rectangular in cross-section. Each of these shaped was placed into a furnace at 2800°F. (1540°C.) and the time required to render the batch entirely to liquid was measured. Liquefield batch running off from the shapes was permitted to drain form the vicinity of the shape. The results are shown in Table I in the order to increasing melting rates.

TABLE I

| Shape | Base area in$^2$ (cm$^2$) | Volume, in$^3$ (liters) | Surface area, in$^2$ (cm$^2$) | Surface/ volume ratio, in$^{-1}$ (cm$^{-1}$) | Melting time, min. |
|---|---|---|---|---|---|
| Slab | 112.9 (728.2) | 451.6 (7.40) | 282.9 (1825) | 0.62 (0.25) | 37.3 |
| Cone | 113.1 (729.5) | 452.4 (7.42) | 252.9 (1631) | 0.56 (0.22) | 36.3 |
| Hemisphere | 113.1 (729.5) | 452.4 (7.42) | 226.2 (1459) | 0.5 (0.20) | 35.8 |
| Scalloped slab | 113.25 (730.5) | 454.6 (7.46) | 330.9 (2134) | 0.73 (0.29) | 34.5 |
| Toroid | 116.9 (754.0) | 457.9 (7.51) | 267.4 (1725) | 0.59 (0.23) | 27.3 |

It can be seen that, contrary to what might be expected, the melting rate did not correspond to surface area of the shapes. For example, the slab shape, in spite of having the second largest surface area, exhibited the slowest melting time. On the other hand, the toroid, with only the third largest surface area, exhibited a melting time significantly shorter than any of the other shapes. It is believed that these results may be explained in terms of relative run-off areas provided by the shapes, with the superior performance of the toroid apparently being due to the fact that run-off from a toroid shape occurs in two directions: toward the central opening, and down the outer periphery. If a conventional batch blanket most closely resembles the slab shape, it may be concluded that contouring the batch blanket to more clearly resemble any of the other shapes, preferably the toroid, would result in improvements in melting rate comparable to those shown in Table I. Because of their resemblance to the cone shape, it may be assumed that tetrahedral or pyramical shapes would also yield comparable improvements in the melting rate. Also, the scalloped slab shape suggests the use of discrete cylindrical of semi-cylindrical shapes or the like. Of course, other, less regular or more complex geometric shapes may also be appropriate so long as they provide increased run-off area.

The most straightforward adaptation of the present invention to commercial glass melting processes is to form aggregates of glass batch to the desired shape and a batch perforation station separate from the melting furnace. The shaping may be carried out simply by pressing the wetted batch into a mold, but for full-scale production, it is preferred that a briquetting type process be used such as those shown in U.S. Patent Nos. 2,214,191; 2,578,110; 3,233,022; and 4,023,976. Unlike these prior art briquetting methods, wherein the object is to produce a large number of small agglomerates having a cumulative large surface area, the present invention entails the production of relatively massive aggregates having sloped surfaces which will have a relatively extended life span within a melting furnace. It would be preferred that the aggregates present sloped surfaces at a substantial elevation above the surface of the molten glass in a melting furnace for at least one half of the residence time of the last melted increment of batch. For example, batch is typically reduced to liquid in a large commercial flat glass furnace in a maximum time of the order of about thirty minutes, in which case it would be preferred that the sloped run-off surfaces of the aggregates persist for at least fifteen minutes in such a furnace. Thus, the agglomerates of the present invention will be considerably larger in size than the briquettes or pellets of glass batch which have been previously proposed. It is preferred that the aggregates of the present invention each have a base area of which the minor dimension is at least 10 centimeters, up to about 25 centimeters. A similar range is preferred for the height of each aggregate. Since the lower portion of each aggregate will be submerged beneath the surface of the molten glass in the furnace, the shape of the lower portion is not critical for the purposes of the present invention and may be flat or irregular, irrespective of the shape of the upper portion of the aggregate.

In any of the embodiments of the present invention, it has been found that glass batch moistened with water to a moisture content of about five percent or ten percent by weight, preferably seven to eight percent, has sufficient self-adhesion to be molded into shapes having sufficient structural integrity for the purposes of the present invention. Instead of, or in addition to, some or all of the water, other binding aids such as caustic soda solution or sodium silicate solution may be employed. Also, molding may be aided by the use of known organic binding agents. Molding glass batch to a self supporting shape entails compacting at least a surface portion of the shape. Sufficient compaction, expressed as percentage increase of density, is generally in the range of ten percent to forty percent, preferably fifteen percent to thirty percent. In some cases it may be sufficient for the compaction to take place in surface portions only of the agglomerate (e.g., the first one to five centimeters) since a compacted outer shell may contain a non-compacted quantity of batch in the interior of the aggregate.

The data herein regarding compaction and moisture content pertain particularly to the following flat glass batch formula which is also the formula employed in the example of Table I.

TABLE II

| Ingredient | Parts by weight |
| --- | --- |
| Sand | 1,000 |
| Soda ash | 313.5 |
| Limestone | 84 |
| Dolomite | 242 |
| Salt cake | 14 |
| Rouge | 0.75 |
| Coal | 0.75 |

The above batch formula is a typical commerical flat glass batch formula, but the principles of the present invention are applicable to the many possible variations in batch formulas, not only for flat glass but also for fiber glass, container glass, silicate melting, and others with only slight, if any, variations from the specific examples set forth herein. By following the general teachings of the present invention, producing a structurally stable aggregate of any conventional glass batch formula will be well within the ordinary skill of the person in the art.

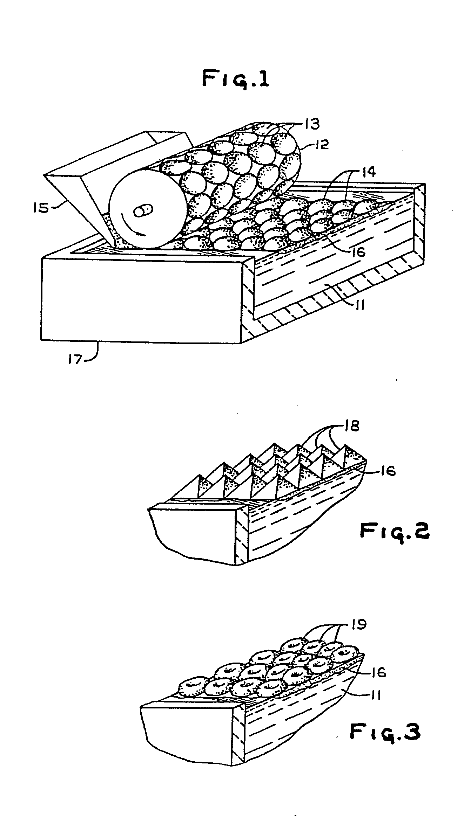

The shaped aggregates may be fed to a melting furnace by means of a reciprocating tray type feeder with a plurality of the aggregates side-by-side so as to form an array of aggregates floating on the pool of molten glass whose appearance would resemble those in Figures 1, 2 and 3. Figure 10 depicts a cross-sectional view of a preferred example of a discrete toroidal aggregate 10 floating in molten glass 11.

Another embodiment of the invention is depicted schematically in Figure 1. There, shaping of the glass batch aggregates takes place at the inlet to the melting furnace itself. This could be effected by means of a reciprocating press type molding apparatus, but the preferred means shown in Figure 1 is a continuous rotating mold 12. The rotating mold is provided with a plurality of concavities 13 corresponding to the shape desired to be immersed into the batch blanket. Depending upon the compactability of the wetted batch formula, the downward pressure of the rotating mold acting against the buoyant force of the batch may be sufficient to compact the batch and form the aggregates, which in Figure 1 are hemispheres 14. In other cases, the pressure required for compaction may be produced between the rotating mold 12 and a stationary rigid member such as the delivery chute 15 between which the batch is pinched. The rotating mold also serves as a batch pusher to feed the contoured batch blanket 16 into the main portion of the furnace from the inlet extension 17.

Figure 2 shows a variation on Figure 1 wherein the contours imparted to the top surface of the batch blanket 16 by a rotating molding means are in the form of a plurality of pyramids 18. Likewise, Figure 3 depicts another variation wherein the rotating mold produces a plurality of toroids 19. These are merely a few examples of the beneficial shapes which may be imparted to the surface of the batch blanket as discussed above.

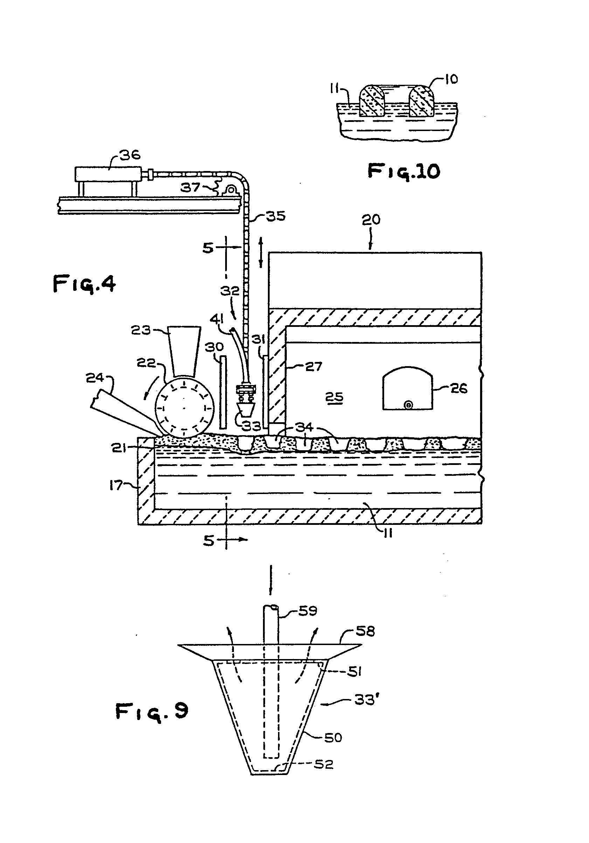

Another embodiment of the invention is depicted in Figures 4 through 9. In this embodiment slopes for ablation melting enhancement are provided by making holes in a batch blanket, and has the advantage that it may be employed in conjunction with existing conventional batch feeding apparatus. The ready adaptability of this embodiment to existing glass melting facilities renders it the preferred mode of the invention on the basis of practicality.

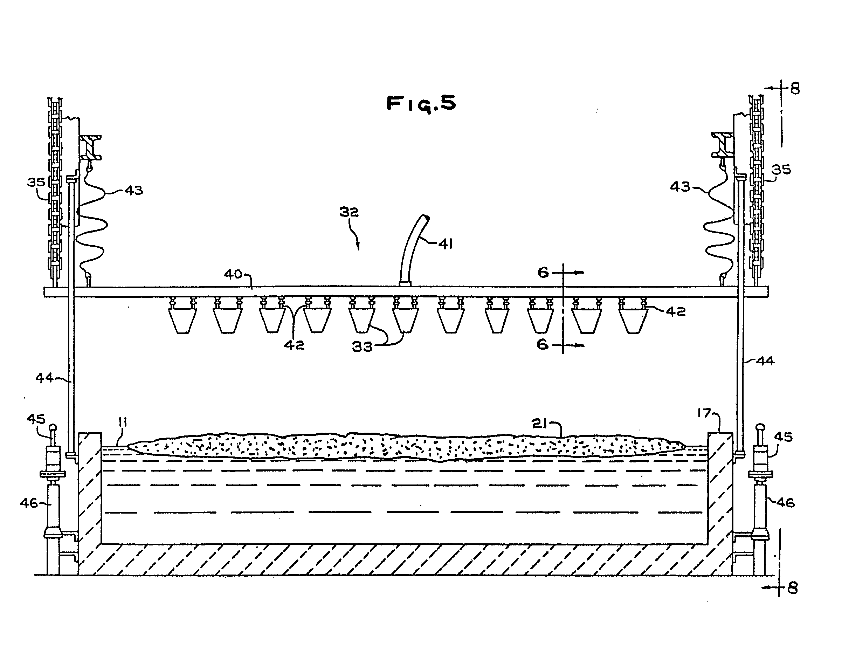

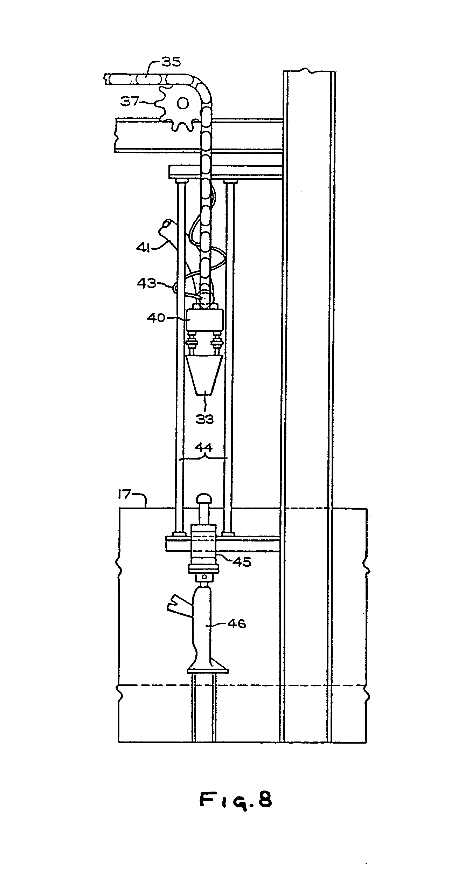

In Figure 4 there is shown schematically the inlet end of a typical continuous glass melting furnace 20 having an inlet extension 17 at which a batch layer 21 is fed onto the surface of a pool of molten glass 16. The glass batch may be fed by means of a rotary feeder 22 of the type shown in U.S. Patent No. 2,829,784, or any other type of feeder, such as the reciprocating tray type, may be employed. As shown in Figure 4, the rotating feeder is provided with batch from a chute 23 and with cullet from a chute 24. The batch layer extends into the main furnace cavity 25, usually at least as far as first burner port 26, which may be one of typically four to eight burner ports in a crossfired, periodially reversing, regenerative firing system as is well known in the art. The novel aspect of Figure 4 is a batch hole making device designated generally as 32 situated between the batch feeder and the front wall 27 of the main furnace cavity, in this case being located between shade coolers 30 and 31. The hole making device 32 is comprised of at least one tapered member 33 provided with vertical reciprocation for insertion into the batch layer at intervals so as to produce a series of spaced holes 34 in the batch layer. The vertical reciprocation may be provided, for example, by means of a chain 35 connected to a pneumatic cylinder 36 by way of a sprocket 37. Details of the hole making device are shown in Figures 5 and 8. The tapered members preferably are fabricated from stainless steel, but mild steel, porcelain coated steel, or ceramics may also be suitable.

In Figure 5 it can be seen that a plurality of the tapered members 33 are supported on a beam 40 extending across the width of the inlet extension of the furnace. The beam 40 may be comprised of a hollow tube closed at the ends and provided with a supply of pressurized air by way of a supply duct 41. The air is supplied to the interior of each of the tapered members 33 by way of hollow tubular legs 42 which connect the tapered members 33 to the beam 40. The air circulates through the tapered members 33 in order to enable them to withstand the high temperatures to which they are exposed. Other coolants such as water could be used instead of air. Safety cables 43 are connected to the beam 40 as a precaution in the event of failure of the pneumatic cylinders 36. At each end of the beam 40 the beam is retained against swinging in the direction of glass travel by a pair of guide rods 44. Additional details of the guide rods 44 are shown in the side view of Figure 8. A shock absorber 45 mounted on a jack 46 for height adjustment is provided on each side of the inlet extension 17 in alignment with each end of the beam 40 to cushion the fall of the hole maker when lowered into the batch layer 21.

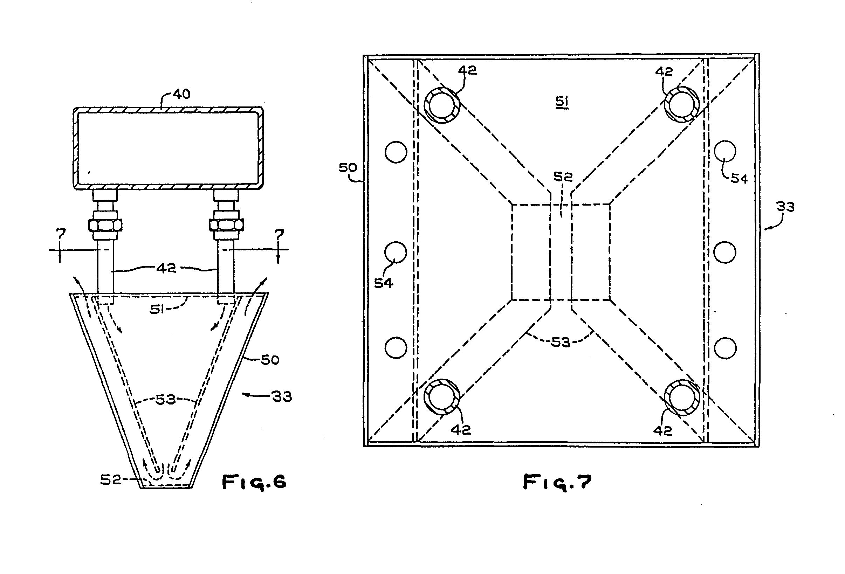

Turning now to Figures 6 and 7, details of the construction of a preferred embodiment of the tapered members 33 may be seen. The tapered member shown is in the form of an inverted, truncated pyramid, but could instead be a cone, tetrahedron, or the like. The tapered member 33 has an outer casing formed by side walls 50, a top plate 51 and a bottom plate 52. The interior is provided with a pair of partitioned plates 53 so as to direct the cooling air from the pipes 42 downwardly in the central portion to the vicinity of the bottom plate 52 and then upwardly along side walls 50. The cooling air then escapes through a plurality of openings 54 in the top plate 51.

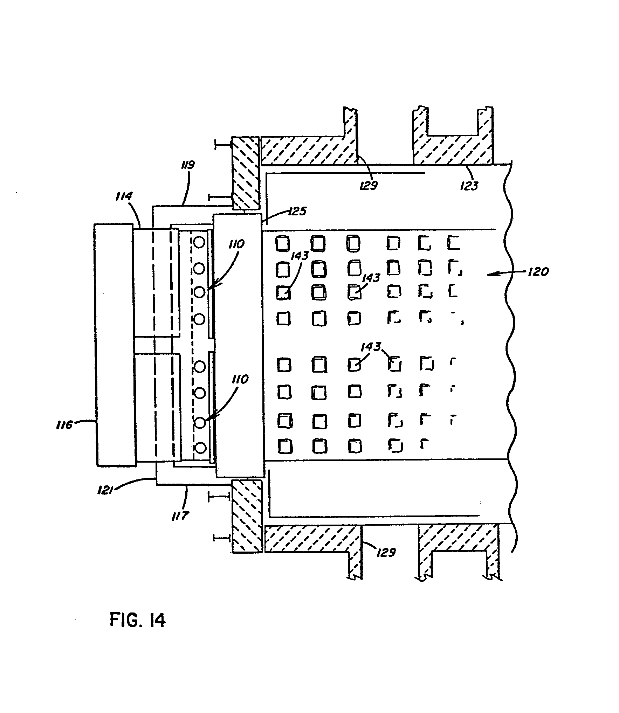

In Figure 9 there are shown two optional modifications to the tapered member 33. A flared skirt 58 may be provided around the top of the tapered member 33' to enhance the compacting effect of the tapered member on the batch. This may permit closer spacing of the holes in the batch layer or deeper penetration of the member into the batch while preventing upwelling of the batch between the holes. The other variation shown in Figure 9 is a simplified air cooling system wherein the tapered member 33' is supported by means of a single air supply tube 59 which extends into the interior of the tapered member to a point near the bottom plate 52, thereby eliminating the need for interior baffles. As in the previous embodiment, the air escapes through openings in the top plate 51.

The tapered members 33 are adapted to force the batch aside and to thus compact the batch around each hole being made as the member is lowered into the batch layer. A minor amount of batch is pushed downwardly by the blunt end of the tapered member and is also compacted. Although it may be preferred in some cases to eliminate this downward pushing by providing the tapered member with a pointed tip, the use of the blunt end is generally considered advantageous in that it prevents the tapered member from coming into direct contact with the highly corrosive molten glass, and prevents molten glass from sticking to the tapered member. Thus, the materials requirements and cooling needs for the tapered members are reduced.

The slope on the sides of the tapered members is selected as a trade-off between compaction and ease of penetration. A relatively flat angle between the opposite sides of each tapered member maximizes the compacting effect on the batch but increases the amount of force required to penetrate the batch layer. Conversely, a narrow included angle between the opposite sides optimizes ease of penetration but yields little compaction in the batch. It is also believed that a steep slope on the sides of a hole produced in the batch layer may be preferred in some cases due to a radiation trapping effect. Accordingly, it is preferred that the included angle between the opposite sides of each tapered member 33 be at least 30 degrees, up to about 90 degrees. In other words, the holes produced would have sloping sides 15 degrees to 45 degrees from vertical.

The tapered members are preferably designed to penetrate substantially through the entire thickness of the batch and sometimes to a depth even greater than the thickness of the batch layer. Due to the tapered shape, greater penetration yields larger holes in the batch and a greater degree of compaction. However, some of the batch which is pushed downwardly by the blunt tips may spring back due to the buoyant effect of the molten glass after the tapered member is withdrawn. It has been found that this portion of the batch melts quickly, leaving an open bottom hole through the batch layer in communication with the molten glass beneath, thus providing a readily available drain for liquefied batch to run off from the top of the batch layer. For example, a pyramidal tapered member as shown in the drawings has been found to operate satisfactorily when dimensioned as follows: 12 inch (30.5 centimeters) square top plate, 3 inch (7.6 centimeters) square bottom plate, and 12 inches (30.5 centimeters) high. With an eight inch (20.3 centimeters) thick batch layer, such a tapered member has been inserted from eight inches (20.3 centimeters) to twelve inches (30.5 centimeters) from the top surface of the batch.

Even when only a few holes are made in batch layer, surprisingly pronounced improvements have been observed. However, in order to optimize the improvements, it is preferred to maximize the number of holes. An upper limit on the number of holes is reached, however, when the spacing between holes is reduced to the point where compaction can not wholly account for displacement of batch from the holes, in which case batch is forced into higher mounds around the holes, or previously made holes are caused to collapse due to horizontal displacement of batch. Therefore, it is preferred that the total area of the holes at the surface plane of the batch layer constitute at least two percent but no more than twenty percent of the total batch area. For example, with the pyramidal tapered member twelve inches square at the top as described above, it has been found satisfactory to space the holes in an eight inch (20.3 centimeters) thick blanket at a twenty inch (50.8 centimeters) spacing center-to-center in both directions. When a plurality of holes are made simultaneously across the width of the batch blanket as in the embodiment which has been described herein, spacing in the transverse direction need not be as great as that in the longitudinal direction since the inserted tapered members prevent collapse of adjacent holes due to horizontal displacement of batch. Preferably, spacing of the holes longitudinally is controlled by automatic timing of the insertion of the tapered members.

The foregoing detailed description related particularly to the melting of soda lime glass. The remainder of the description will relate to an embodiment (Figures 11—16) that is particularly pertinent to the melting of sodium silicate glass.

Referring now to the drawings, and particularly Figure 11, there is shown for purposes of illustration the inlet end of a glass-melting furnace of the continuous tank-type generally designated by the number 120, which contains a molten pool of glass 140 flowing continuously from a charging end to an oppositely disposed outlet end of the tank, not shown. The rate at which the molten glass is withdrawn from the furnace governs the rate at which the glass-making materials (glass batch) are introduced into the tank, it being desired to maintain the pool of molten glass at a somewhat constant level.

The furnace 120 is defined by a floor 122, sidewall 123, roof arch 124, and end wall 125. Disposed outwardly of end wall 125 at the inlet or charging end of the furnace is a charging bay, or doghouse, which, as shown, comprises a small substantially rectangular extension of the melting chamber projecting outwardly from end wall 125 along the longitudinal axis of the furnace and defined by sidewalls 117 and 119, end wall 121, and a continuation of the furnace floor 122. The top of the doghouse is open, permitting new batch material to be deposited directly on the molten pool 140 in the doghouse.

The charging bay extension of the furnace communicates with the melting chamber of the furnace through an opening or arch 126 in wall 125. Above the body of molten glass 140 in the charging bay, arch 126 is substantially closed by a vertically suspended gate 127, which is internally cooled, e.g., by water. Gate 127 is commonly described as a "cooler" which closes off arch 126 to retard the escape of highly heated gases which are maintained at a positive pressure in the heated melting chamber 128 of the furnace. Naturally, the loss of heat or the entry of cooler air into the melting zone reduces the efficiency of furnace operation by decreasing the temperature and pressure in the melting zone below the optimum.

Adjacent to the charging bay of furnace 120 is glass batch feeder means 114 of the conventional reciprocating tray-type. Although a reciprocating tray feeder is depicted in Figure 11, the glass batch can be fed to the furnace by means of a rotary feeder of the type shown in U.S. Patent No. 2,829,784 or any other type of feeder useful for laying down a blanket of glass batch onto a pool of molten glass.

As shown in Figure 11, the reciprocating tray feeder 114 is inclined toward the charging bay to permit more readily the flow of glass batch material across the tray and onto the molten pool of glass in the charging bay. Tray 114 is reciprocally mounted and mechanically connected to a conventional variable speed motor (not shown) in a manner well known in the art so as to oscillate back and forth below feeder bin 116. Above feeder bin 116 is mounted a batch bin (not shown), the bottom of which is equipped with at least one feeder chute 118, which is provided at its lower end with a closure or gate (not shown). A further gate (not shown) disposed across the width of the tray feeder regulates the thickness of the glass batch on the tray.

In the feeding operation, loose glass batch 142 from the batch bin flows through chute 118 into feeder bin 116 and is deposited on feeder tray 114. The closure or gate in the bottom of chute 118 is adjusted to permit an adequate flow of glass batch mixture into feeder bin 116 and tray 114. As the feeder tray moves forward into the charging bay, push bar 115 moves along just above the surface of the molten glass and pushes forward into the furnace the layer of glass batch material which was spread previously on the surface of the molten glass, i.e., during the previous cycle of feeder tray operation. As the feeder tray moves backwardly, a fresh charge of glass batch material is spread onto the surface of the molten glass in a manner well known in the art. In this way, a blanket of glass batch is spread continuously onto the surface of the molten glass in the charging bay and then pushed into the interior of the glass furnace.

As is conventional in melting tank furnaces of the regenerative type, the oppositely disposed upper sidewalls 123 are provided with suitably spaced burner ports 129 communicating with regenerative chambers (not shown). The interior of the furnace is maintained at regulated temperatures by heating means therein, e.g., gaseous flames produced by burners arranged in the spaced burner ports 129 by burning a fossil fuel such as oil, gas, or powdered coal in the space above the molten glass and glass batch materials so that flames pass over them, causing a transfer of heat to the contents of the furnace. Additional heat can be supplied to the molten glass in such furnaces by using submerged heaters, typically electric heaters. Also, furnaces using electric heaters alone have been described.

In accordance with the present invention and with particular reference to Figures 11, 14, 15, and 16, there is provided a plurality of batch surface modifiers, designated generally by the numeral 110, situated between feeder tray 114 and cooler 127. The batch surface modifier 110 is positioned so as not to interfere with feeder tray 114 when the tray is at its most forward location during feeding glass batch material to the charging bay.

The batch surface modifiers 110 are horizontally-spaced across the width of the charging bay and disposed above the glass batch therein. They are independently mounted to be vertically adjustable and are independently operable. Each includes a tapered pothole-producing member 104 provided with vertical reciprocating means for providing periodic vertical reciprocating movement to the tapered members so that they penetrate into the glass batch layer and produce a series of spaced holes 143 in the glass batch layer in the charging bay. As shown in Figures 11, 15, and 16, vertical reciprocation is provided by an individually operated double-acting air cylinder 108 having air inlets 111 and 112. The air inlets are connected to a source of pressurized air (not shown) sufficient to operate the piston of the cylinder.

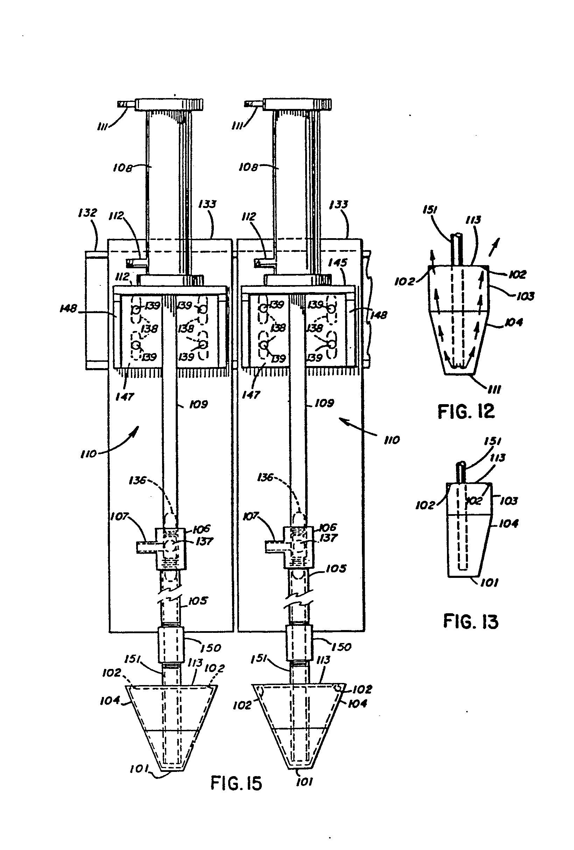

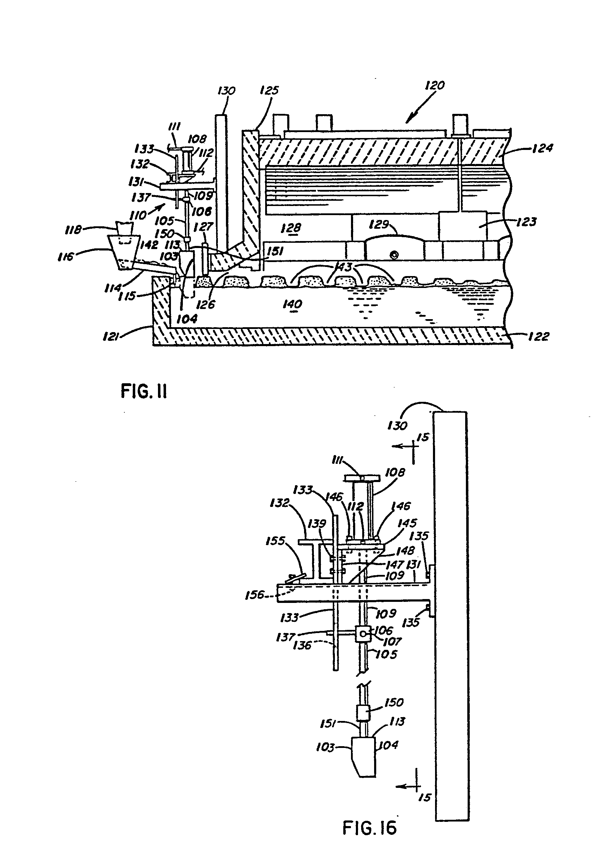

The shaft 109 of air cylinder 108 is connected to coupling 106 having cooling air inlet 107. Coupling 106 provides the physical connection between shaft 109 and pipe 105, which is connected to tapered member cone 104 by means of pipe to pipe joint 150 and pipe 151. In the event tapered members 104 require replacement, they can be easily removed from the rest of the assembly by unscrewing it from pipe joint 150. Pipe 151 is welded or rigidly attached in some other conventional manner to the top 113 of member 104. As shown in Figures 12 and 15, pipe 151 extends into tapered member 104 and terminates near bottom plate 101. Cooling air introduced into pipe coupling 106 through inlet 107 travels downwardly through pipes 105 and 151 and joint 150, and impinges on the interior of the bottom plate 101 of tapered member 104. The cooling air travels up the sides of cone 104 and exits through four holes or orifices 102, which have been bored in the top plate 113 of cone 104 at the corners near the point where the sides and top are attached. The cone depicted in Figure 12 is shown as having a collar 103. The cooling air is provided by a source of pressurized air (not shown), e.g., an air compressor. The pressure of this air is not critical, e.g., it can vary from 1 to about 150 pounds per square inch (0.07 to 10.34 bar) gauge positive pressure.

Figure 13 illustrates a modified tapered member in which one side of the tapered member 104 is vertical. The vertical side is positioned adjacent to cooler 127 and reduces the possibility of the top of member 104 from becoming caught beneath the underside of cooler 127.

Referring now to Figure 16, there is shown an embodiment for mounting the batch surface modifiers on the furnace. Beam 131 is shown attached in a horizontal plane to vertically disposed beam 130 by means of bolts 135. Beam 130 forms a part of the end wall frame of furnace 120. A further beam 131A (not shown) is attached similarly at the opposite side of the furnace to a beam 130A (not shown). A second beam 132 is placed across beams 131 and 131A to extend across the width of the charging bay of the furnace. Beam 132 is held in place on beam 131 and 131A by means of pressure plates 155 which are attached to beam 131 by bolts 156.

Attached in a vertical mode to the cross member of beam 132, e.g., by welding, is mounting plate 133 to which is attached plate 147, e.g., by bolts 139. The vertical alignment of plate 147 is adjustable by means of slotted bolt holes 138 (see Figure 15) in plate 147 and bolts 139 so that the depth of depression of cone 104 into the glass batch can be set accurately. Horizontally disposed plate 145 is attached to vertical plate 147 and is supported by rigid right angle support plates 148. Plates 145, 147, and 148 can be attached to one another in any convenient manner, e.g., by welding.

Each of the double-acting air-operated cylinders 108 utilized to produce the network of potholes in the glass batch in the charging bay are placed on top of horizontal plate 145 and attached thereto by means of bolts 146. The alignment of the batch surface modifiers 110 during movement is controlled by guide pin 137 in slotted hole 136 in plate 133. Guide pin 137 prevents shaft 109 and pipe 105 from turning during the reciprocating movements of the batch surface modifiers 110, and thus maintains tapered member 104 in its proper alignment.

Although a double-acting, air-operated cylinder is shown for producing vertical reciprocating movement for the batch surface modifiers 110, other vertical reciprocating means can be used. Other means for producing vertical reciprocation that can be utilized include a mechanical gear motor, hydraulic cylinder, an electrical magnetic actuator, a cam and mechanical linkage, e.g., a chain connected to a pneumatic cylinder by way of a sprocket.

In accordance with the present invention, the surface of the blanket of glass batch is imprinted with a pattern of holes as the batch is fed into the melting furnace. The shape of the hole can be that of an inverted pyramid, inverted truncated pyramid tetrahedron, cone, toroid, or the like. The tapered member can be fabricated from any material capable of withstanding the temperatures and environment to which it is subjected. The tapered members 104 can be fabricated from metal, e.g., stainless steel, mild steel, porcelain-coated steel, because they are internally air cooled. Other coolants for the tapered members such as water can be used instead of air, but air is preferred.

Tapered members 104 force the batch aside during its downward movement therein and compact the batch around each hole being made as the member is lowered into the batch blanket. In addition, in one mode of operating the embodiment of Figures 11—16, a portion of the batch beneath the bottom plate 101 is compacted and pushed downwardly into and substantially below the body of molten glass, i.e., the bottom of tapered members 104 extend into the molten glass a distance about equal to the thickness of the batch blanket below the tapered member. In doing so, the batch beneath the bottom plate is compacted and forced into the body of molten glass. The glass batch surrounding the bottom plate insulates the tapered member and prevents it from coming into direct contact with the highly corrosive molten glass and further prevents the molten glass from sticking to the member. In a typical sodium silicate glass-melting operation, the batch blanket is about 4 to 6 inches (10.2 to 15.2 cm) thick and, consequently, in accordance with the present invention, tapered member 104 is extended during its downward stroke a distance sufficient to move the bottom plate of the tapered member from 4 to 6 inches (10.2 to 15.2 cm) below the liquid level of the molten glass. The batch, which is compacted and pushed downwardly by the blunt tip of tapered member 104, springs back due to the buoyant effect of the molten glass beneath it after the tapered member is withdrawn from the batch and returned to its original starting position. It has been observed, however, that the compacted bottom portion of the batch, i.e., the portion below bottom plate 101, melts more quickly than the adjoining batch, thereby leaving an open bottom hole through the batch layer in communication with the molten glass beneath and providing a readily available drain for liquefied batch to run off from the top of the batch layer.

As shown in Figure 14, a total of eight hole-producing tapered members are illustrated. As described heretofore, the number of hole-producing members can vary and will depend on the size of the charging bay and the size of the hole-producing members. Typically, they will be uniformly spaced across the width of the charging bay. The holes can be spaced similarly in both directions. When a plurality of holes are made across the width of the batch blanket, as in the embodiment described herein, spacing in the longitudinal direction need not be as great as in the transverse direction. In one embodiment, longitudinal spacing of the holes is such that there is a slight overlap of the holes produced, i.e., a furrow effect is created in the longitudinal direction. Spacing of the holes longitudinally in the batch blanket is controlled by timing the insertion of the tapered members. In a further embodiment, the tapered members are stroked periodically near or at the end of the backstroke of the feeder tray, i.e., as the feeder tray moves backwardly to its starting position, and no more often than every other feeder stroke. The batch surface modifier is operated every third or fourth cycle of the tray feeder.

The present invention is more particularly described in the following Examples, which are intended as illustrative only since numerous modifications and variations therein will be apparent to those skilled in the art.

Example I

A conventional glass melting furnace producing sodium silicate glass at a rate of approximately 260 tons per day was retrofitted with eight hole-generating batch surface modifiers, as shown in Figures 11 and 14. The eight tapered members 104 were spaced substantially equally (about 18 inches (45.7 cm) apart, center-to-center) in a transverse direction across the approximately 14-foot (4.27 m) wide charging bay (doghouse) of the furnace extension. The tapered members 104 were 6 inches square (15.2 cm²) at their base and 12 inches by 9 inches (30.5 cm by 22.9 cm) at their top with a 6-inch (15.2 cm) collar and were sloped from the base of the collar to the base of the tapered member on three sides. The tapered members were similar to that depicted in Figures 13 and 16 with the vertical portion of the member positioned in the doghouse adjacent to the water-cooled gate 127 to avoid interference between the member 104 and the water-cooled gate 127 during vertical reciprocation. This modification to the tapered member of Figure 12 was necessitated because of the limited area available in the furnace between the water-cooled gate 127 and the feeder tray at its most forward position.

Tapered members 104 were each connected to the shaft of a double-acting air cylinder having a 16-inch (40.6 cm) stroke by means of shaft-to-pipe coupling 106, pipe 105, coupling 150, and pipe 151. The base of the tapered members 104 was positioned approximately four to six inches (10.2 to 15.2 cm) above the surface of the glass batch blanket floating atop the body of molten glass in the charging bay. The vertical movement of the batch surface modifier was guided by guide pin 137 in shaft guide 136. The air cylinders were connected to a common source of pressurized air, not shown, capable of generating 50 to 70 pounds (3.4 to 4.8 bar) air pressure. The cooling air inlets in couplings 106 were connected to a common source of pressurized air, e.g., an air compressor.

The air cylinders were stroked (thus projecting the tapered members into the glass batch and molten pool) simultaneously every second cycle of the feeder tray and while the feeder tray was at its most rearward position. In practice, a limit switch was connected to the feeder tray, which switch was operatively connected to a relay which initiated a count on a counter in order to control the frequency of the downstroke and upstroke of the tapered member. The counter, in turn, was operatively connected to a timer to control the length of the downstroke and the timer connected to solenoid valve, which provided air to the air cylinder. In this example, the air cylinder was stroked once for four seconds every two strokes of the feeder tray when the feeder tray was at the end of the backstroke in order to avoid fresh batch from falling into the depression formed by the downward movement of tapered member. At the end of the downstroke, air pressure to inlet 111 was cut off and the air pressure applied to inlet 112, thereby causing withdrawal of the tapered member to its original position.

The glass melting furnace was natural gas fired and the temperatures within the furnace were monitored by thermocouples positioned at various locations longitudinally along the crown of the furnace. A temperature of 2850°F (1566°C) for the thermocouple nearest the molten glass discharge end of the furnace was selected as the standard. In this Example, the natural gas feed rate was set at 80,000 standard cubic feet/hour (SCFH) (2265 m³/h) on the gas controller. With the batch surface modifier in operation, the glass batch feed rate was adjusted to maintain the aforesaid thermocouple at 2850°F (1566°C). After temperatures and glass batch feed rate had stabilized for several hours, the batch surface modifier unit was turned off and the gas flow rate was increased to maintain the thermocouple in the crown at 2850°F (1566°C). No change in the glass batch feed rate was made to assure a constant furnace production rate. The natural gas fuel rate was increased to 93,000 SCFH (2633 m³/h) on the natural gas controller to maintain the thermocouple temperature in order to assure complete melting of the glass batch at this particular (constant) furnace production rate. This equated to a 14.0 percent fuel savings when the batch surface modifier unit was in operation.

Example II

The procedure and apparatus of Example I were utilized. In this Example, the natural gas flow rate was set at 70,000 SCFH (1982 m³/h) on the gas controller with the batch surface modifier unit in operation. The batch surface modifier unit was turned off after temperatures and feed rate had stabilized, and it was found necessary to increase the gas flow to 83,000 SCFH (2330 m³/h) to maintain the standard thermocouple at 2850°F (1566°C). This equated to a 15.7 percent savings of fuel.

Example III

The procedure and apparatus of Example I were used except that the natural gas flow rate was set at 83,000 SCFH (2330 m³/h) on the gas controller with the batch surface modifier unit off. The glass batch feed rate was adjusted to maintain the standard thermocouple at 2850°F (1566°C). After temperatures and the batch feed rate had stabilized for several hours, the batch surface modifier unit was turned on and the natural gas flow rate decreased to hold the standard thermocouple constant at 2850°F (1566°C). It was found that the gas fuel rate could be decreased to 74,000 SCFH (2095 m³/h) with the batch surface modifier unit on. This equated to a 10.8 percent fuel savings.

Example IV

The procedure and apparatus of Example III were used except that the natural gas flow rate was set at 90,000 SCFH (2549 m³/h) on the gas controller with the batch surface modifier unit off. The aforesaid unit was switched on after temperatures and the glass batch feed rate had stabilized, and it was found that it was necessary to decrease the gas flow rate to 81,000 SCFH (2284 m³/h). This equated to a 10.0 percent fuel savings.

The average gas savings for Examples I—IV equalled 12.6 percent. The data of such examples illustrates the diagrammatic effect the batch surface modifier unit has on energy savings. Conversely, the amount of energy utilized can remain constant while increasing the glass batch feed rate to increase the production rate of the furnace. With the batch surface modifier unit in operation, it was observed that glass batch substantially covered the entire surface of molten glass within the furnace (to the point where all of the glass batch was melted), and broke up readily into logs; whereas, with the batch surface modifier off, it was observed that there was an open V-shaped area within the center of the glass furnace that was not covered with glass batch—batch moving to each side of the furnace in a direction to intersect the sidewalls of the furnace. Thus, it was found that the present invention also enhances log formation and produces improved coverage of the batch on the surface of the molten glass.

**Claims**

1. A method of melting glass wherein particulate glass batch material is deposited as a floating layer (21) on a pool of molten glass (11) contained in a melting furnace (20), propelling the layer toward a melting zone where the batch material melts into the pool of molten glass, and wherein the propelling may impart shallow surface features to the batch layer (21); characterized by shaping the batch so as to provide a batch layer (21) of compacted mass interspersed with openings extending substantially through the thickness of the batch layer so as to create sloped upper surfaces, whereby melting of the batch layer is improved by liquefied batch flowing into the openings.

2. The method of claim 1, characterized by shaping the batch in the form of compacted aggregates having a minimum base dimension of at least 10 cm and having sloped upper surfaces and feeding the pre-shaped aggregates into the melting furnace.

3. The method of claim 1, characterized by in-situ shaping the feeded loose batch at the inlet zone of the melting furnace in the form of agglomerates (17, 18, 19) having sloped upper surfaces.

4. The method of claim 1, characterized by shaping at spaced intervals across the batch layer (21) a plurality of tapered holes (34) having sloped surfaces of compressed batch without substantially increasing the thickness of the batch layer.

5. The method of claims 2 and 3, characterized by shaping said batch agglomerates substantially as cones, pyramids (18), tetrahedrons, spheres, hemispheres (17) or toroids (19).

6. The method of claim 4, characterized by creating array of the holes (34) by periodically inserting a plurality of tapered members (33) spaced across the width of the batch layer in the batch layer (21).

7. The method of claims 4 or 6, characterized in that the holes (34) comprises at least 2 percent of the area covered by the batch layer (21).

8. The method of claims 4, 6—7, characterized by compacting the surfaces of the holes (34) at least ten percent relative to the density of loose batch as fed to the furnace.

9. The method of claims 1—8, characterized by wetting the batch with about 5 to 10 percent by weight water prior to being shaped.

10. Apparatus for the manufacture of glass including a glass melting furnace (20) having a heated melting chamber (25) for containing a pool of molten glass (11), glass batch feeder means (22) for feeding a layer (21) of granular glass batch material onto the surface of the molten pool of glass (16), characterized in that there are provided a plurality of vertically operable, tapered hole-producing members (33) spaced horizontally across the width of and above the glass batch layer (21), vertical reciprocating means (36) for providing vertical reciprocating movement to the tapered members (33) periodically so that the bottom of each such member (33) penetrates substantially through the thickness of the glass batch layer (21) beneath each such tapered members (33) during its downward movement, and means (42) for cooling the tapered members (33).

11. The apparatus of claim 10, characterized in that the tapered members (33) are supported outside a main heating chamber (25) so as to engage the batch layer (21) in an inlet extension (17) prior to entering the main heating chamber (25).

12. The apparatus of claims 10 or 11, characterized in that the tapered members (33) are provided to produce by their lowering slightly overlapping holes (34) and thereby a furrow effect in the glass batch (21) in a longitudinal direction.

13. The apparatus of claims 10—12, characterized in that the tapered members (33) are supported by and extend downwardly from a beam (40) extending above the batch layer (21) transversely to the direction of batch feeding.

14. The apparatus of claims 10—13, characterized in that each tapered member (33) is independently mounted and independently operable.

15. The apparatus of claims 10—14, characterized in that each tapered member (33) has a blunt tip.

16. The apparatus of claims 10—15, characterized in that opposite sides of each tapered members (33) are at an angle of about 30° to 90° to each other.

17. The apparatus of claims 10—16, characterized in that each tapered member (33) comprises an inverted conical, tetrahedral, or pyramidal shape.

18. The apparatus of claim 10, characterized in that the means (42) for cooling the tapered members (33) comprise means (42) for passing air into the tapered members (33).

19. The apparatus of claim 13 wherein the beam (40) is provided with an interior passage in communication (41) with a source of pressurized air and with the interiors of the tapered members (33).

20. The apparatus of claim 10, characterized in that the vertical reciprocating means (36) is a double-acting air cylinder.

21. The apparatus of claims 10—18, characterized in that the tapered member (33) is an inverted truncated pyramid.

22. The apparatus of claim 21, characterized in that the truncated pyramid has a collar (58) at its upper end.

**Patentansprüche**

1. Verfahren zum Schmelzen von Glas, bei dem teilchenförmiges Glasgemenge als schwimmende Schicht (21) auf einem Bad aus geschmolzen Glas (11) in einem Schmelzofen (20) abgelagert wird, Weitertreiben der Schicht in eine Schmelzzone, in der das Glasgemenge in das Bad aus geschmolzenem Glas schmilzt und wobei beim Weitertreiben flache Oberflächenmuster auf der Glasgemengeschicht (21) erzeugt werden können, gekennzeichnet durch Formen des Glasgemenges so daß eine Glasgemengeschicht (21) aus verdichteter Mass entsteht, durchsetzt von Öffnungen, die sich im wesentlichen durch die Dicke der Glasgemengeschicht erstrecken, so daß abgeschrägte obere Oberflächen entstehen, und das Schmelzen der Gemengeschicht durch Einfließen von verflüssigtem Gemenge verbessert wird.

2. Verfahren nach Anspruch 1, gekennzeichnet durch Formen des Gemenges zu verdichteten Anhäufungen, deren Basislänge mindestens 10 cm beträgt und die abgeschrägte obere Oberflächen aufweisen und Einführen der vorgeformten Anhäufungen in den Schmelzofen.

3. Verfahren nach Anspruch 1, gekennzeichnet durch in-situ Formen des lose zugeführten Glasgemenges in der Eingangszone des Glasschmelzofens zu Anhäufungen (14, 18, 19) mit abgeschrägten oberen Oberflächen.

4. Verfahren nach Anspruch 1, gekennzeichnet durch Formen einer Vielzahl von Vertiefungen (34) in Abständen quer über die Gemengeschicht (21), die abgeschrägte Oberflächen aus verdichtetem Gemenge aufweisen, ohne die Dicke der Gemengeschicht wesentlich zu vergrößern.

5. Verfahren nach Ansprüchen 2 und 3, gekennzeichnet durch Ausbilden der Gemengeanhäufungen im wesentlichen als Kegel, Pyramiden (18), Tetraeder, Kugeln, Halbkugeln (14) oder Ringwulste (19).

6. Verfahren nach Anspruch 4, gekennzeichnet durch Erzeugen von Reihen von Vertiefungen (34) durch wiederholtes Eindrücken einer Vielzahl von spitz zulaufenden Gliedern (33), die quer über die Breite der Gemengeschicht angeordnet sind, in die Gemengeschicht (21).

7. Verfahren nach Ansprüchen 4 oder 6, dadurch gekennzeichnet, daß die Vertiefungen (34) mindestens 2% der von der Gemengeschicht (21) bedeckten Fläche ausmachen.

8. Verfahren nach Ansprüchen 4, 6—7, gekennzeichnet durch Verdichten der Oberfläche der Vertiefungen (34) um mindestens 10%, bezogen auf die Dichte des losen Gemenges, das dem Schmelzofen zugeführt wird.

9. Verfahren nach Ansprüchen 1—8, gekennzeichnet durch Anfeuchten des Gemenges mit etwa 5 bis 10 Gew.% Wasser vor dem Ausformen.

10. Vorrichtung zur Herstellung von Glas mit einem Glasschmelzofen (20), der eine beheizte Schmelzkammer (25) mit einem Bad aus geschmolzenem Glas (11) aufweist, Glasgemengezuführeinrichtungen (22) zum Einbringen einer Schicht (21) von körnigem Glasmenge auf die Oberfläche des Bades aus geschmolzenem Glas (16), dadurch gekennzeichnet, daß eine Vielzahl von senkrecht bewegbaren, spitz zulaufenden, Vertiefungen erzeugenden Gliedern (33) waagrecht quer über die Breite oberhalb der Glasgemengeschicht (21) angeordnet ist, senkrecht sich auf und ab bewegende Teile (36) vorhanden sind, um die spitz zulaufenden Glieder (33) periodisch senkrecht auf und ab zu bewegen, so daß der Boden jedes dieser Glieder (33) während der Abwärtsbewegung im wesentlichen durch die Dicke der Glasgemengeschicht (21) unter jedem der spitz zulaufenden Glieder (33) dringt, und daß Einrichtungen (42) zum Kühlen der spitz zulaufenden Glieder (33) vorhanden sind.

11. Vorrichtung nach Anspruch 10, dadurch gekennzeichnet, daß die spitz zulaufenden Glieder (33) außerhalb der Haupterwärmungskammer (25) befestigt sind, um in einer Eingangsverlängerung (17) vor dem Eintritt in die Haupterwärmungskammer (25) einzuwirken.

12. Vorrichtung nach Ansprüchen 10 oder 11, dadurch gekennzeichnet, daß die spitz zulaufenden Glieder (33) so ausgebildet sind, daß beim Absenken sich geringfügig überlappende Vertiefungen entstehen und ein Durchfurchen des Glasgemenges (21) in Längsrichtung bewirkt wird.

13. Vorrichtung nach Ansprüchen 10—12, dadurch gekennzeichnet, daß die spitz zulaufenden Glieder (33) von einer Schiene (40) getragen werden und sich von dieser nach unten erstrecken, wobei diese sich oberhalb der Gemengeschicht (21) quer zur Zuführrichtung des Gemenges erstreckt.

14. Vorrichtung nach den Ansprüchen 10 bis 13, dadurch gekennzeichnet, daß jedes der spitz zulaufenden Glieder (33) unabhängig befestigt und unabhängig betätigbar ist.

15. Vorrichtung nach den Ansprüchen 10 bis 14, dadurch gekennzeichnet, daß jedes der spitz zulaufenden Glieder (33) eine stumpfe Spitze aufweist.

16. Vorrichtung nach den Ansprüchen 10—15, dadurch gekennzeichnet, daß die einander gegenüberliegenden Seiten jedes spitz zulaufenden Gliedes (33) in einem Winkel von etwa 30°—90° zueinander verlaufen.

17. Vorrichtung nach den Ansprüchen 10—16, dadurch gekennzeichnet, daß jedes der spitz zulaufenden Glieder (33) eine umgekehrte Kegel-, Tetraeder- oder Pyramidenform aufweist.

18. Vorrichtung nach Anspruch 10, dadurch gekennzeichnet, daß die Kühleinrichtungen (42) der spitz zulaufenden Glieder (33) Einrichtungen zum Durchleiten von Luft in die Glieder (33) aufweisen.

19. Vorrichtung nach Anspruch 13, dadurch gekennzeichnet, daß die Schiene (40) einen inneren Durchlaß in Verbindung (41) mit einer Preßluftquelle und dem Inneren der spitz zulaufenden Glieder (33) aufweist.

20. Vorrichtung nach Anspruch 10, dadurch gekennzeichnet, daß die senkrecht auf- und abbewegbare Einrichtung (36) ein doppelwirkender Luftzylinder ist.

21. Vorrichtung nach Ansprüchen 10 bis 18, dadurch gekennzeichnet, daß das spitz zulaufende Glied (33) eine umgekehrte stumpfe Pyramide ist.

22. Vorrichtung nach Anspruch 21, dadurchgekennzeichnet, daß die stumpfe Pyramide einen Kragen (58) an ihrem oberen Ende aufweist.

**Revendications**

1. Procédé pour l'amélioration de la fusion du verre dans le four de fusion, dans lequel une matière particulaire de charge vitrifiante est déposée, sous forme de couche flottante (21), sur un bain de verre fondu (11) contenu dans le four de fusion (20), cette couche étant entraînée vers une zone de fusion où la matière de charge s'incorpore en fondant dans le bain de verre fondu, la propulsion de la couche de charge vitrifiante (21) pouvant donner à celle-ci des caractéristiques superficielles sur une faible épaisseur, caractérisé en ce que dans lequel la charge est façonnée de manière à former une couche de charge (21) qui est faite d'une masse compactée, parsemée d'ouvertures (34) s'étendant pratiquement sur toute l'épaisseur de la couche de charge, de manière à créer des surfaces supérieures en pente, ce qui améliore la fusion de la couche de charge grâce à l'écoulement de charge liquéfiée dans lesdites ouvertures.

2. Procédé selon la revendication 1, caractérisé en ce que la charge est façonnée sous la forme d'agrégats compactés ayant au minimum une dimension de base d'au moins 10 cm et présentant des surfaces supérieures en pente, et en ce que les agrégats préformés sont enfournés dans le four de fusion.

3. Procédé selon la revendication 1, caractérisé en ce que la charge non agglomérée enfournée est façonnée in situe dans la zone d'entrée du four de fusion, sous la forme d'agglomérés (14, 18, 19) présentant des surfaces supérieures en pente.

4. Procédé selon la revendication 1, caractérisé en ce qu'il est formé, à intervalles espacés sur l'étendue de la couche de charge (21), un certain nombre de trous coniques (34) délimités par des surfaces en pente de charge compressée, sans qu'il en résulte une augmentation sensible de l'épaisseur de la couche de charge.

5. Procédé selon la revendication 2 ou 3, caractérisé en ce que les agglomérés de charge sont façonnés sous forme de cônes, de pyramides (18), de tétraèdres, de sphères, de demisphères (14) ou de tores (19).

6. Procédé selon la revendication 4, caractérisé en ce qu'une série de trous (34) est créée par insertion périodique de plusieurs organes coniques (33), espacés sur toute la largeur de la couche de charge, dans la couche de charge (21).

7. Procédé selon la revendication 4 ou 6, caractérisé en ce que les trous (34) constituent au moins 2% de l'aire couverte par la couche de charge (21).

8. Procédé selon l'une quelconque des revendications 4, 6 et 7, caractérisé en ce que les surfaces des trous (34) sont compactées à raison d'au moins 10% par rapport à la densité de la charge non agglomérée, dans l'état où elle est enfournée dans le four.

9. Procédé selon l'une quelconque des revendications 1 à 8, caractérisé en ce que la charge est humidifiée avec environ 5 à 10% en poids d'eau avant d'être façonnée.

10. Dispositif pour la fabrication de verre, comprenant un four de fusion du verre (20) qui comporte une chambre de fusion chauffée (25) desintée à contenir un bain de verre fondu (11), des moyens d'enfournement de la charge vitrifiante (22) pour déposer une couche (21) de matière granulaire de charge vitrifiante sur la surface du bain fondu de verre (16), caractérisé en ce qu'il est prévu plusieurs organes coniques formateurs de trous (33), actionnés verticalement, espacés horizontalement sur toute la largeur de la couche de charge vitrifiante (21) et au-dessus de celle-ci, des moyens d'actionnement vertical (36) pour imprimer périodiquement un mouvement de va-et-vient vertical aux organes coniques (33), de telle manière que la partie inférieure de chacun de ces organes (33) pénètre pratiquement dans toute l'épaisseur de la couche de charge vitrifiante (21) au-dessous de chacun des organes coniques (33) pendant le mouvement descendant de celui-ci, et des moyens (42) pour refroidir les organes coniques (33).

11. Dispositif selon la revendication 10, caractérisé en ce que les organes coniques (33) sont montés à l'extérieur d'une chambre principale de chauffage (25), de façon à attaquer la couche de charge (21) dans un prolongement d'enfournement (17), avant que la couche ne pénètre dans la chambre principale de chauffage (25).

12. Dispositif selon la revendication 10 ou 11, caractérisé en ce que les organes coniques (33) sont agencés de manière à former, en descendant, des trous (34) qui se chevauchent légèrement et à produire ainsi un effet de sillon dans la charge vitrifiante (21) dans la direction longitudinale de celle-ci.

13. Dispositif selon l'une quelconque des revendications 10 à 12, caractérisé en ce que les organes coniques (33) sont montés sur une poutre (40) qui s'étend au-dessus de la couche de charge (21) perpendiculairement à la direction d'avance de la charge, et s'étendent vers le bas à partir de cette poutre.

14. Dispositif selon l'une quelconque des revendications 10 à 13, caractérisé en ce que chaque organe conique (33) est monté indépendamment et actionnable indépendamment.

15. Dispositif selon l'une quelconque des revendications 10 à 14, caractérisé en ce que chaque organe conique (33) a un bout épointé.

16. Dispositif selon l'une quelconque des revendications 10 à 15, caractérisé en ce que les faces opposées de chacun des organes coniques (33) forment entre elles un angle de 30° à 90° environ.

17. Dispositif selon l'une quelconque des revendications 10 à 16, caractérisé en ce que chaque organe conique (33) présente une forme de cône renversé, de tétraèdre ou de pyramide.

18. Dispositif selon la revendication 10, caractérisé en ce que les moyens (42) pour refroidir les organes coniques (33) comprennent des moyens (42) pour faire passer de l'air dans les organes coniques (33).

19. Dispositif selon la revendication 13, caractérisé en ce que la poutre (40) comporte un passage intérieur qui est en communication avec une source d'air sous pression et avec les espaces intérieures des organes coniques (33).

20. Dispositif selon la revendication 10, caractérisé en ce que les moyens d'actionnement vertical (36) sont constitués par un cylindre pneumatique à double effet.

21. Dispositif selon l'une quelconque des revendications 10 à 18, caractérisé en ce que l'organe conique (33) est une pyramide tronquée renversée.

22. Dispositif selon la revendication 21, caractérisé en ce que la pyramide tronquée comporte un collet (58) à son extrémité supérieure.

Fig.1

Fig.2

Fig.3

1

FIG.10

FIG.4

FIG.9

Fig.5

FIG.6

FIG.7

FIG. 8

FIG. 14

FIG. 12

FIG. 13

FIG. 15

FIG. II

FIG. 16